# EUROPÄISCHE PATENTANMELDUNG

(11) **EP 2 332 650 A1**
(43) Veröffentlichungstag der Anmeldung: **15.06.2011**
(21) Anmeldenummer: 10189933.4
(22) Anmeldetag: 04.11.2010
(51) Int. Cl.: B01J 38/00

(54) **Katalysatorreinigung**

(30) Priorität: 17.11.2009 DE 102009053630
(71) Anmelder: Bayerische Motoren Werke Aktiengesellschaft, 80809 München (DE)
(72) Erfinder: Dr.Zimmer, Rainer, 82061, Neuried (DE); Rieser, Michael, 80809, Muenchen (DE); Bunewskij, Manfred, 84184, Tiefenbach (DE)

(57) **Zusammenfassung**

Reinigung einer mit Ablagerungen, insbesondere Mangan verunreinigten, von einem Abgas angeströmten Stirnseite eines Katalysators in einer Abgasanlage einer Brennkraftmaschine, gekennzeichnet durch folgende erfindungsgemäße Verfahrensschritte:
➢ Zugänglichmachung der Stirnseite des Katalysators,
➢ Beaufschlagen der Stirnseite mit einer mit einem Granulat versetzten Druckluft, bis die Ablagerungen weitgehend entfernt sind,
➢ Verschließen der Zugänglichkeit der Stirnseite des Katalysators

Wenn der Abgasgegendruck aufgrund von Ablagerungen für einen normalen Brennkraftmaschinenbetrieb zu groß wird, muss der Katalysator nicht ausgetauscht werden und bekommt nach der Reinigung weitestgehend seine normalen Konvertierungseigenschaften zurück.

## Beschreibung

Die Erfindung betrifft ein Verfahren zur Reinigung eines Katalysators mit den Merkmalen des Patentanspruchs 1.

Verschiedenste nationale bzw. überregionale Normen legen die Mindestanforderung für Otto-Kraftstoffe fest. Zum Beispiel beschreibt die EN 228 (Europäische Norm) das in Europa eingeführte unverbleite Benzin (Euro-Super). In der nationalen Ausgabe DIN EN 228 sind darüber hinaus noch die unverbleiten Normal- und Superpluskraftstoffe beschrieben. In den USA sind Otto-Kraftstoffe in der ASTMD 439 (American Society for Testing and Materials) spezifiziert. Otto-Kraftstoffe bestehen aus Kohlenwasserstoffen, die Zusätze von sauerstoffhaltigen, organischen Komponenten sowie Additive zur Verbesserung ihrer Eigenschaften enthalten können. Weiter wird zwischen normalem und Super-Kraftstoff unterschieden. Super-Kraftstoff weist eine höhere Klopffestigkeit zum Betreiben höher verdichteter Brennkraftmaschinen auf. Außerdem gelten für Sommer und Winter sowie für verschiedene Regionen unterschiedliche Flüchtigkeitsmerkmale.

Wie oben beschrieben gibt es für unterschiedliche Staaten unterschiedlichste Normen für Otto-Kraftstoffe. Dies bedeutet in nachteiliger Weise, dass Otto-Kraftstoffe in unterschiedlichen Ländern auch unterschiedliche Zusätze oder Verunreinigungen enthalten können. Unter Verunreinigungen werden beispielsweise Mangan, Aluminium, Phosphor, Silizium, Zirkonium, Magnesium, Zink und Kalzium etc. verstanden. Diese sind nur beispielhaft genannt, da noch wesentlich mehr Elemente im Otto-Kraftstoff vorhanden sein können.

Diese Elemente, insbesondere Mangan, können sich als Ablagerungen an der angeströmten Stirnseite eines Katalysators in der Abgasanlage einer Brennkraftmaschine negativ bemerkbar machen. Dies kann so weit führen, dass bis über 90% der Katalysatorstirnfläche von den Ablagerungen verschlossen werden, so dass ein Abgasgegendruck aufgebaut wird, der den Brennkraftmaschinenbetrieb nicht mehr zulässt, d. h. der Brennkraftmaschine mangelt es an Leistung und Drehmoment. Üblicherweise werden derartig verunreinigte Katalysatoren im Rahmen eines Werkstattbesuches ausgetauscht, was für den Kunden sehr teuer und aufwendig ist.

Daher liegt dieser Erfindung die Aufgabe zugrunde, eine Maßnahme aufzuzeigen, wie ein Austausch eines derart verunreinigten Katalysators vermieden werden kann.

Diese Aufgabe wird durch die Verfahrensschritte im kennzeichnenden Teil des Patentanspruchs 1 gelöst.
Durch das erfindungsgemäße Reinigungsverfahren wird der Abgasgegendruck praktisch wieder auf das Maß eines neuwertigen Katalysators gebracht. Ebenso wird das Katalysatoranspringen, das Erreichen der "light-off"-Temperatur, das ist die Temperatur, bei der der Katalysator 50% seiner vollen Konvertierungseigenschaften aufweist, wieder auf den Zustand eines normal gealterten Katalysators gebracht. Auch die Konvertierungseigenschaften für Schadstoffe, wie z. B. Kohlenwasserstoffe (HC), Kohlenmonoxid (CO) und Stickoxiden (NOₓ) werden praktisch wieder auf die Eigenschaften eines normal gealterten Katalysators gebracht.

Die Verfahrensschritte gemäß den Patentansprüchen 2 bis 4 sind drei besonders bevorzugte Varianten um die Stirnseite eines mit Ablagerungen verunreinigten Katalysators zugänglich zu machen.

Als besonders positiv haben sich in Versuchen gemäß Patentanspruch 5 Trockeneis (CO₂) oder Walnussgranulat herausgestellt, die weniger abrasiv wirken als z. B. Sand- oder Glasperlenstrahlen. Die besten Resultate wurden mit Trockeneis erzielt, da hier zusätzlich der Effekt des Thermoschocks auftritt, der die Ablagerungen quasi vom Trägermaterial "absprengt".

Der Druckbereich gemäß Patentanspruch 6 hat sich ebenfalls in Versuchen als besonders geeignet herausgestellt.

Im Folgenden ist die Erfindung anhand von 5 Figuren näher erläutert.
- Fig. 1: zeigt ein Foto einer Stirnseite eines verunreinigten Katalysators;
- Fig. 2: zeigt ein Foto der Stirnseite des erfindungsgemäß gereinigten Katalysators;
- Fig. 3: zeigt ein Diagramm über vor dem Katalysator anliegenden Ab- gasgegendrücken für einen verunreinigten, einen neuen und ei- nen erfindungsgemäß gereinigten Katalysator;
- Fig. 4: zeigt in zwei Diagrammen ein Katalysatoranspringverhalten für einen verunreinigten, einen neuen und einen gereinigten Kata- lysator;
- Fig. 5: zeigt in drei Diagrammen den HC-, CO-, NOx-Umsatz für einen verunreinigten, einen neuen und einen gereinigten Katalysator.

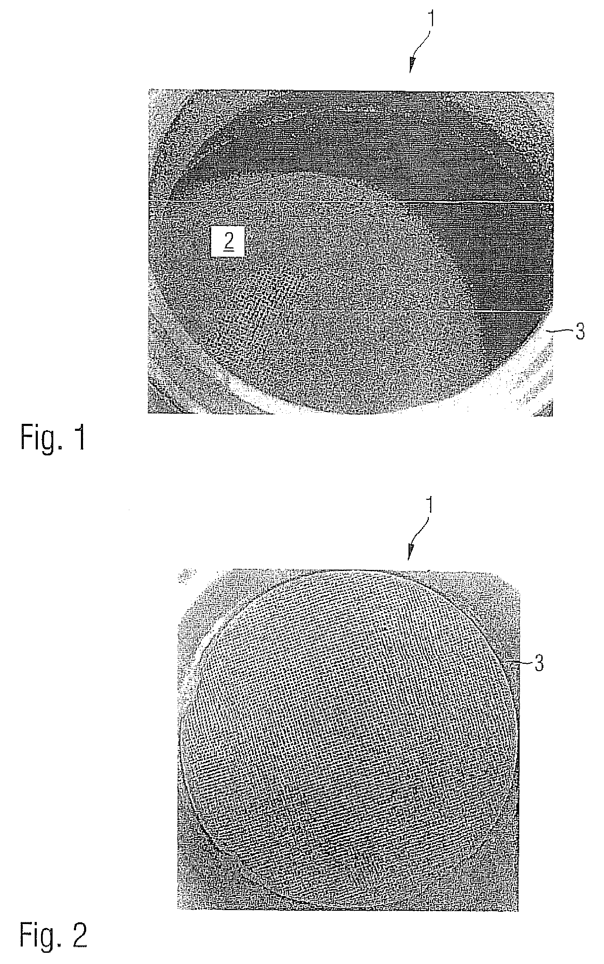

Im Folgenden gelten in den Fig. 1 bis 5 für gleiche Bauelemente die gleichen Bezugsziffern.

Fig. 1 zeigt ein Foto von einer Stirnseite eines mit Ablagerungen 2 verunreinigten Katalysators 1, der in einem Katalysatorgehäuse 3 angeordnet ist. Analysen haben gezeigt, dass diese Ablagerungen 2 insbesondere aus Mangan bestehen, die die von einem Abgas einer Brennkraftmaschine angeströmte Stirnseite des Katalysators 1 in der Abgasanlage im Laufe des Betriebs der Brennkraftmaschine verschließen.

Um den hierdurch erzeugten erhöhten Abgasgegendruck, mit der Folge verringerter Leitung und Drehmoment, abzubauen, wird erfindungsgemäß vorgeschlagen, die Stirnseite des Katalysators 1 zugänglich zu machen, mit einer mit einem Granulat versetzten Druckluft zu beaufschlagen, bis die Ablagerungen weitestgehend entfernt sind und anschließend die Zugänglichkeit der Stirnseite des Katalysators wieder zu verschließen.

Die Zugänglichmachung und der Wiederverschluss der Stirnseite des Katalysators können durch 3 unterschiedliche Verfahren erfolgen:
1. Ausbau des Katalysators mit seinem Katalysatorgehäuse aus der Abgasanlage und Verschließen der Zugänglichkeit durch erneuten Einbau des Katalysators mit seinem Katalysatorgehäuse in die Abgasanlage.
2. Zugänglichmachung durch mechanisches Öffnen des Katalysatorgehäuses in Strömungsrichtung des Abgases vor der verunreinigten Stirnseite und Verschließen der Zugänglichkeit durch mechanisches Verschließen der Zugänglichkeit. Hierbei kann es sich beispielsweise um Bohren, Fräsen, Sägen, Flexen und dgl. handeln, wobei anschließend die Zugänglichkeit wieder zugeschweißt wird.
3. Zugänglichmachung durch Entfernen einer Lambda-Sonde aus dem Katalysatorgehäuse in Strömungsrichtung des Abgases vor der verunreinigten Stirnseite und Verschließen der Zugänglichkeit durch einen erneuten Einbau der Lambda-Sonde in das Katalysatorgehäuse.

Besonders bevorzugt kommt als Granulat Trockeneis (CO₂) oder Walnussgranulat zum Einsatz. In Versuchen hat sich herausgestellt, dass diese beiden Methoden einem Sandstrahlen oder Glasperlenstrahlen zu bevorzugen ist, da die Katalysatorwaben bei diesem Verfahren aufgrund der geringeren Abrasivität nicht zerstört werden. Trockeneis weist weiter noch die vorteilhafte Eigenschaft auf, dass bedingt durch die Temperaturdifferenz zwischen Katalysatorwabe und dem Trockeneis, ein starker Temperatursprung auftritt, welches zu einem sog. Thermoschock führt, der die Ablagerungen besonders effizient "absprengt". Weiter weist die Druckluft besonders bevorzugt einen Überdruck zwischen 1 bar und 15 bar auf, da in diesem Druckbereich die Reinigungswirkung am größten ist.

Fig. 2 zeigt ein Foto eines erfindungsgemäß gereinigten Katalysators 1, in seinem Katalysatorgehäuse 3, der praktisch keine Ablagerungen 2 mehr aufweist.

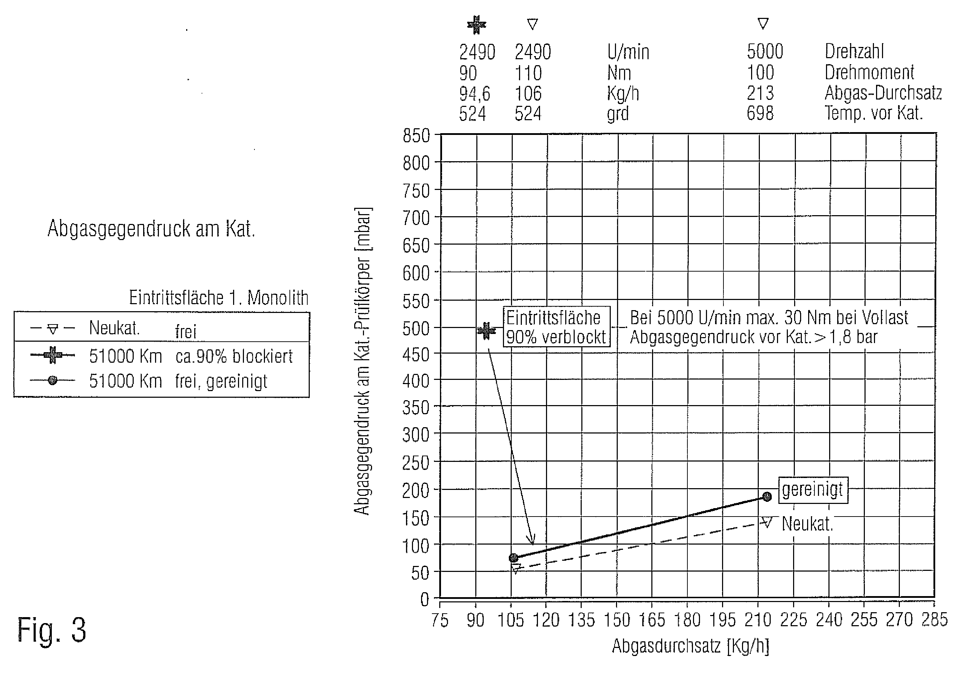

In den folgenden Fig. 3 bis 5 wird nun die positive Wirkung des erfindungsgemäßen Reinigungsverfahrens erläutert:

Fig. 3 zeigt in einem Diagramm einen Abgasgegendruck am Katalysator 1 an seiner Eintrittsfläche für einen neuen Katalysator 1 (stehendes Dreieck), einen Katalysator 1 nach 51.000 km Fahrleistung der mit Ablagerungen 2 zu ca. 90% blockiert ist (Kreuz) und denselben Katalysator 1, der erfindungsgemäß gereinigt wurde (Punkt). Auf einer Y-Achse ist der Abgasgegendruck an der Eintrittsfläche des Katalysators 1 aufgetragen im Bereich von 0 bis 850 mbar (Millibar). Über die X-Achse ist ein Abgasdurchsatz im Bereich von 75 bis 285 in kg/h (Kilogramm/Stunde) dargestellt.

Eine erste Messung wurde bei 2490 1/min durchgeführt, eine zweite Messung wurde bei 5000 1/min durchgeführt. Der neue Katalysator 1 weist bei 2490 1/min einen Abgasgegendruck von etwa 50 mbar auf, bei 5000 1/min von etwa 148 mbar. Der zu ca. 90% von Ablagerungen 2 blockierte Katalysator 1 weist bei 2490 1/min einen Abgasgegendruck von knapp 500 mbar auf. Bei 5000 1/min leistet die Brennkraftmaschine maximal 30 Nm (Newtonmeter) bei Voillast, bei einem Abgasgegendruck vor den Katalysator 1 von über 1,8 bar. Nach der erfindungsgemäßen Reinigung der Gaseintrittsfläche des Katalysators 1 fiel der Abgasgegendruck in positiver Weise auf nahezu den Wert, den ein neuer Katalysator 1 aufweist. Dargestellt durch einen Pfeil.

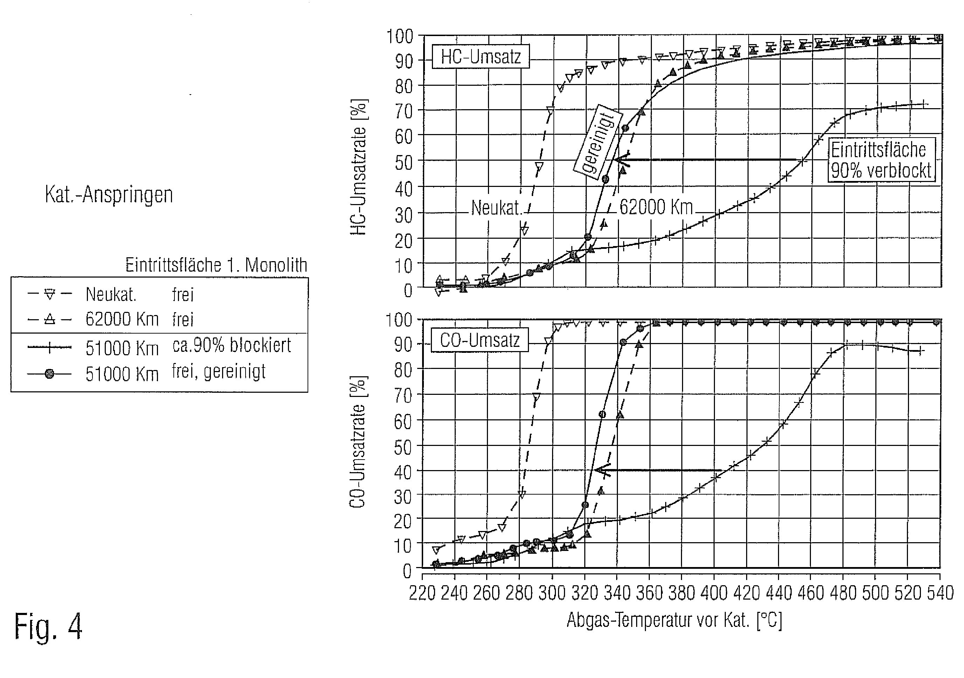

Fig. 4 zeigt in zwei Diagrammen ein Katalysatoranspringverhalten, d. h. das Temperaturverhalten zum Erreichen einer Konvertierungstemperatur ("lightoff"-Temperatur) anhand eines HC- und CO-Umsatzes. Über die Y-Achsen sind die HC-Umsatzraten und die CO-Umsatzraten von 0 bis 100 % aufgetragen. Über die X-Achse ist die Abgas-Temperatur vor dem Katalysator 1 von 220°C bis 540°C dargestellt.

Jedes Diagramm zeigt vier Graphen, ein erster Graph für einen neuen Katalysator 1 (stehendes Dreieck), ein zweiter Graph für einen Katalysator 1 mit 62.000 km Laufleistung, jedoch ohne Verunreinigung (liegendes Dreieck), ein dritter Graph für einen Katalysator 1 mit ca. 51.000 km Laufleistung, dessen Stirnseite zu ca. 90% durch Ablagerungen 2 blockiert ist (Kreuz) und ein vierter Graph für denselben Katalysator 1, der erfindungsgemäß gereinigt ist (Punkt).

Deutlich ersichtlich ist sowohl für den HC-Umsatz als auch für den CO-Umsatz, dass die Anspringtemperatur für den neuen Katalysator 1 bei ca. 290°C liegt. Für den Katalysator 1 mit ca. 62.000 km Laufleistung, jedoch ohne Ablagerungen 2, liegt diese Temperatur jeweils bei ca. 340°C. Für den Katalysator mit ca. 51.000 km Laufleistung und einer Blockade durch Ablagerungen 2 von ca. 90% verschlechtert sich dieser Wert auf ca. 450°C für die HC-Umsetzung und ca. 430°C für die CO-Umsetzung. Nach der Reinigung verbessert sich der Wert jeweils auf ca. 330°C sowohl für den HC-Umsatz als auch für den CO-Umsatz und ist somit vergleichbar einem Katalysator 1 mit ca. 62.000 km Laufleistung, ohne Ablagerungen 2. Die Verbesserung ist wiederum durch Pfeile symbolisch dargestellt.

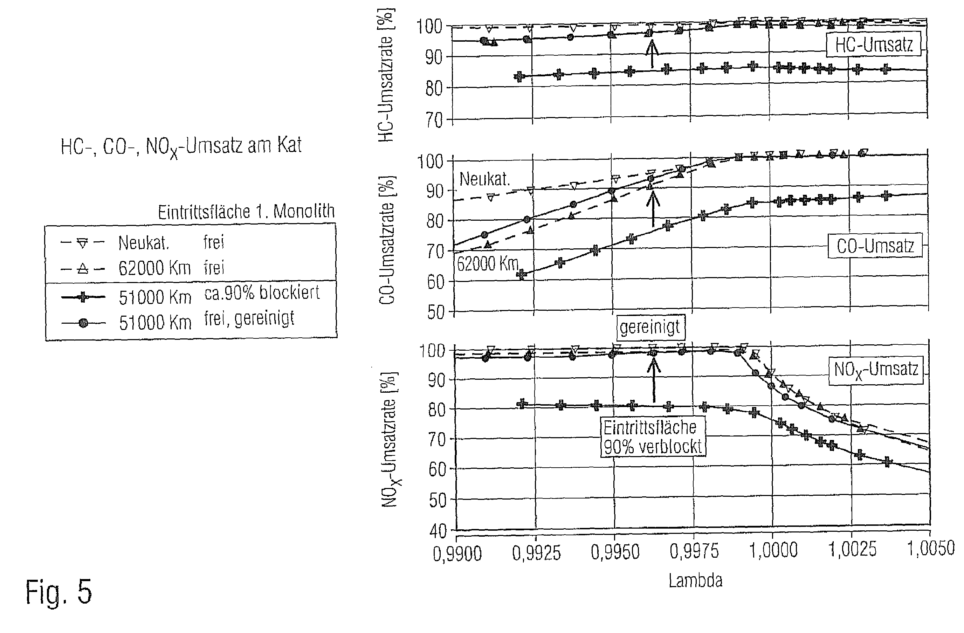

Fig. 5 zeigt in 3 Diagrammen den HC-, CO- und NOₓ-Umsatz an einem Katalysator 1. Über die Y-Achse ist jeweils eine Umsatzrate in % aufgetragen. Über die X-Achse ist ein Lambda-Wert von 0,99 bis 1,005 dargestellt.

Wie in Fig. 4 wurde der neue Katalysator 1 vermessen(stehendes Dreieck), der Katalysator ohne Ablagerungen 2 mit 62.000 km Laufleistung (liegendes Dreieck), der Katalysator 1 mit 51.000 km Laufleistung und einer Blockierung aufgrund der Ablagerungen 2 von ca. 90% (Kreuz) und der Katalysator 1 mit ca. 51.000 km Laufleistung, der erfindungsgemäß gereinigt wurde (Punkt). Deutlich erkennbar ist wiederum der Abfall der Umsatzrate sowohl für den HC-, den CO- und auch den NOₓ-Umsatz für den Katalysator mit den Ablagerungen 2 sowie die äußerst starke Verbesserung der Katalysatorumsetzraten nach der erfindungsgemäßen Reinigung.

Somit muss der Katalysator 1 durch die erfindungsgemäße Reinigung nicht mehr ausgetauscht werden und bekommt nach der Reinigung weitgehend seine normalen Konvertierungseigenschaften zurück.

In den zuvor ausgeführten Versuchen wurde eine Reinigung mit Trockeneis (CO₂) durchgeführt, wobei das Gerät "Microclean" der Firma Cold Jet verwendet wurde.

### Bezugszeichenliste:

- 1.: Katalysator
- 2.: Ablagerungen
- 3.: Katalysatorgehäuse

## Patentansprüche

1. Reinigung einer mit Ablagerungen, insbesondere Mangan verunreinigten von einem Abgas angeströmten Stirnseite eines Katalysators in einer Abgasanlage einer Brennkraftmaschine,
**gekennzeichnet, durch** folgende Verfahrensschritte:
- Zugänglichmachung der Stirnseite des Katalysators,
- Beaufschlagen der Stirnseite mit einer mit einem Granulat versetzten Druckluft, bis die Ablagerungen weitgehend entfernt sind;
- Verschließen der Zugänglichkeit der Stirnseite des Katalysators.

2. Reinigung nach Patentanspruch 1,
**dadurch gekennzeichnet, dass** die Zugänglichmachung durch einen
- Ausbau des Katalysators mit seinem Katalysatorgehäuse aus der Abgasanlage und
- das Verschließen der Zugänglichkeit durch einen
- Einbau des Katalysators mit seinem Katalysatorgehäuse in die Abgasanlage erfolgt.

3. Reinigung nach Patentanspruch 1,
**dadurch gekennzeichnet, dass** die Zugänglichmachung durch ein
- mechanisches Öffnen des Katalysatorgehäuses und
- das Verschließen der Zugänglichkeit durch ein
- mechanisches Verschließen der Zugänglichkeit erfolgt.

4. Reinigung nach Patentanspruch 1,
**dadurch gekennzeichnet, dass** die Zugänglichmachung durch ein
- Entfernen einer Lambdasonde aus dem Katalysatorgehäuse und
- das Verschließen der Zugänglichkeit durch einen
- Einbau der Lamdasonde in das Katalysatorgehäuse erfolgt.

5. Reinigung nach einem der Patentansprüche 1 bis 4,
**dadurch gekennzeichnet, dass** als Granulat Trockeneis (CO₂) oder Walnussgranulat zum Einsatz kommt.

6. Reinigung nach einem der Patentansprüche 1 bis 5,
**dadurch gekennzeichnet, dass** die Druckluft einen Überdruck zwischen 1 bar und 15 bar aufweist.
